# EUROPEAN PATENT APPLICATION

(11) **EP 4 822 751 A1**
(43) Date of publication of application: **14.10.2026**
(21) Application number: 26155054.5
(22) Date of filing: 29.01.2026
(51) Int. Cl.: H01M 4/04, H01M 4/139, H01M 10/0562, H01M 10/0585, H01M 10/0525

(54) **SOLID-STATE BATTERY AND METHOD FOR MANUFACTURING SOLID-STATE BATTERY**

(30) Priority: 11.04.2025 JP 2025065767
(71) Applicant: Toyota Jidosha Kabushiki Kaisha, Toyota-shi, Aichi-ken 471-8571 (JP)
(72) Inventor: KAWAGUCHI, Yusuke, Toyota-shi,, 471-8571 (JP)
(74) Representative: J A Kemp LLP

(57) **Abstract**

A solid-state battery includes: a first electrode layer containing a first electrode active material; an electrolyte layer containing a solid electrolyte and disposed on the first electrode layer; and a second electrode layer containing a second electrode active material and disposed on the electrolyte layer. An Sdr of a surface of the first electrode layer in contact with the electrolyte layer is 9.2% or more.

## Description

### BACKGROUND OF THE INVENTION

### 1. Field of the Invention

The present disclosure relates to a solid-state battery and a method for manufacturing the solid-state battery.

### 2. Description of Related Art

Regarding solid-state batteries, Japanese Unexamined Patent Application Publication No. 2014-207104 (JP 2014-207104 A) discloses a method for producing a laminate in which an anode layer, a solid electrolyte layer, and a cathode layer are laminated in this order by laminating a pressed anode layer and a solid electrolyte layer and then laminating a pressed cathode layer on the solid electrolyte layer and further pressing the laminate. In the method described in JP 2014-207104 A, the solid electrolyte layer formed on a film for film formation is laid on the anode, and then the film for film formation is peeled off to transfer the solid electrolyte layer onto the anode.

Japanese Unexamined Patent Application Publication No. 2023-107428 (JP 2023-107428 A) discloses an all-solid-state lithium secondary battery including an electrode laminate in which a cathode having a cathode composite layer containing a cathode active material and an anode are laminated via a solid electrolyte layer, and the surface roughness Ra at the interface between the cathode composite layer and the solid electrolyte layer is 1.0 µm or less. JP 2023-107428 A discloses that the cathode active material having a small average particle size is used because the surface roughness Ra at the interface between the cathode composite layer and the solid electrolyte layer can be easily made smaller.

### SUMMARY OF THE INVENTION

When an electrolyte layer containing a solid electrolyte is transferred to an electrode layer (cathode layer or anode layer), however, there is a problem in that the adhesion between the electrolyte layer and the electrode layer is insufficient. Therefore, an object of the present disclosure is to provide a solid-state battery in which the adhesion between the electrolyte layer and the electrode layer is improved, and a method for manufacturing the solid-state battery.

The present disclosure that achieves the above object encompasses the following aspects.
<1> A solid-state battery including: a first electrode layer containing a first electrode active material; an electrolyte layer containing a solid electrolyte and disposed on the first electrode layer; and a second electrode layer containing a second electrode active material and disposed on the electrolyte layer, in which an Sdr of a surface of the first electrode layer in contact with the electrolyte layer is 9.2% or more.
<2> The solid-state battery according to <1>, in which the first electrode active material is a cathode active material, and the first electrode layer is a cathode layer disposed on a cathode current collector.
<3> The solid-state battery according to <1> or <2>, in which no adhesive layer is provided between the first electrode layer and the electrolyte layer.
<4> A method for manufacturing a solid-state battery, the method including: kneading materials other than a first electrode active material, and then adding the first electrode active material and further kneading the materials; forming an electrolyte layer containing a solid electrolyte on a first electrode layer formed from a first electrode slurry containing the first electrode active material and obtained by the kneading; and forming a second electrode layer containing a second electrode active material on the electrolyte layer, in which an Sdr of a surface of the first electrode layer in contact with the electrolyte layer is 9.2% or more.
<5> The method according to <4>, in which, in the forming of the electrolyte layer, the electrolyte layer is transferred onto the first electrode layer.
<6> The method according to <4> or <5>, further including pressurizing the first electrode layer and the electrolyte layer in a laminating direction after the forming of the electrolyte layer.

According to one embodiment of the present disclosure, in the solid-state battery, the adhesion between the first electrode layer and the electrolyte layer can be improved by defining the Sdr of the surface of the first electrode layer in contact with the electrolyte layer.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view of a main part of a solid-state battery according to an embodiment of the present disclosure; and
FIG. 2 is a characteristic diagram showing the relationship between the Sdr of the surface of a cathode active material layer in contact with a solid electrolyte layer and the area ratio of the solid electrolyte layer.

### DETAILED DESCRIPTION OF EMBODIMENTS

In the present disclosure, numerical ranges indicated using "to" represent ranges inclusive of minimum and maximum values specified before and after "to," respectively.

In numerical ranges described in stages in the present disclosure, the upper limit value or the lower limit value of a certain numerical range may be replaced with the upper limit value or the lower limit value of another numerical range that is described in stages. In numerical ranges described in the present disclosure, the upper limit value or the lower limit value of a certain numerical range may be replaced with a value described in the examples.

In the present disclosure, the term "step" includes not only an independent step, but also a step that is not clearly distinguishable from other steps, as long as the intended purpose of the step is achieved.

In the present disclosure, when there is a plurality of types of substance corresponding to each component, the amount of each component means the total amount of the plurality of types of substance unless otherwise specified.

In the present disclosure, when an embodiment is described with reference to the drawings, the configuration of the embodiment is not limited to the configuration shown in the drawings. In addition, the sizes of components shown in the drawings are conceptual, and the relative size relationships among components are not limited to those shown in the drawings.

### Solid-state Battery

A solid-state battery of the present disclosure will be described below. The solid-state battery of the present disclosure includes a first electrode layer containing a first electrode active material, an electrolyte layer containing a solid electrolyte and disposed on the first electrode layer, and a second electrode layer containing a second electrode active material and disposed on the electrolyte layer. The Sdr of the surface of the first electrode layer in contact with the electrolyte layer is 9.2% or more. In the solid-state battery of the present disclosure, the Sdr is preferably 10.4% or more. In the solid-state battery of the present disclosure, the adhesion between the first electrode layer and the electrolyte layer is improved by setting the Sdr of the surface of the first electrode layer in contact with the electrolyte layer within the above range. Therefore, according to the present disclosure, the electrolyte layer can be reliably formed on the first electrode layer in the manufacturing process, the peeling of the formed electrolyte layer can be suppressed, there is no need to dispose an adhesive layer for causing the electrolyte layer to adhere to the first electrode layer, and the decrease in battery performance due to low adhesion between the first electrode layer and the electrolyte layer can be suppressed. The Sdr means a developed interfacial area ratio (unit: %), and is calculated as an increase rate from a surface area A₁ to an area A₀ when the surface is projected onto an XY plane (Sdr = [A₁/A₀ - 1] × 100). Specifically, the Sdr of the surface of the first electrode layer in contact with the electrolyte layer can be measured using, for example, a laser microscope OLS5100 manufactured by Olympus Corporation.

In the solid-state battery of the present disclosure, the adhesion between the first electrode layer and the electrolyte layer can be evaluated by a method described in the examples. That is, the electrolyte layer formed on a film for film formation is transferred onto the first electrode layer, and then the film for film formation is peeled off. Then, the area of the electrolyte layer transferred onto the first electrode layer is calculated, and the adhesion can be evaluated from the transferred area ratio. That is, the adhesion between the first electrode layer and the electrolyte layer can be evaluated based on the extent to which the electrolyte layer formed on the film for film formation has been transferred onto the first electrode layer. When the adhesion between the first electrode layer and the electrolyte layer is high, a small amount of the electrolyte layer remains on the film for film formation when the film for film formation is peeled off. Thus, the area ratio is high. When the adhesion between the first electrode layer and the electrolyte layer is low, a large amount of the electrolyte layer remains on the film for film formation when the film for film formation is peeled off, or the electrolyte layer peels off from the first electrode layer. Thus, the area ratio is low. In particular, in the solid-state battery of the present disclosure, the area ratio is preferably 95% or more, and more preferably 100%.

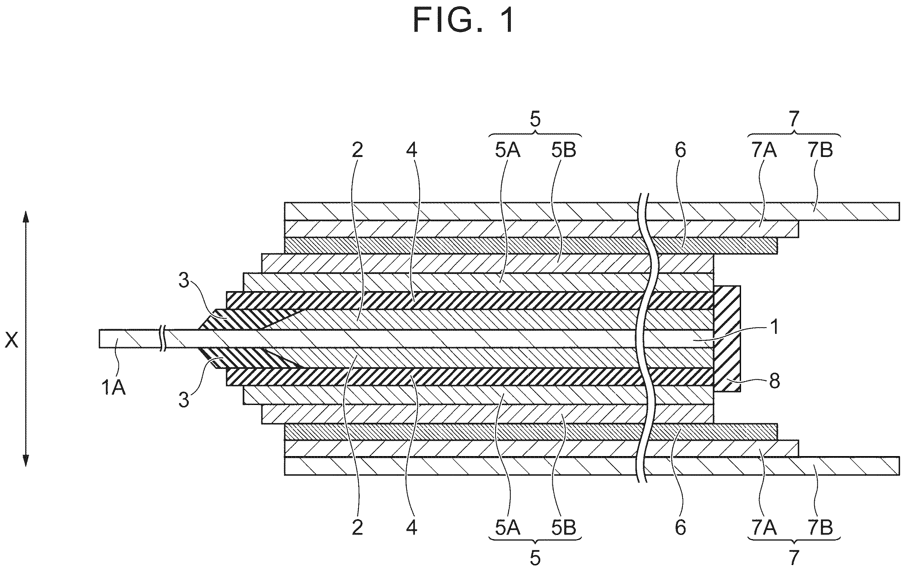

As shown in FIG. 1, a solid-state battery according to an embodiment of the present disclosure includes a cathode current collector 1, cathode layers 2 and insulating layers 3 that are disposed on both principal surfaces of the cathode current collector 1, solid electrolyte layers 4 that are disposed on the cathode layers 2 and the insulating layers 3, anode layers 5 that are disposed on the solid electrolyte layers 4, carbon coating layers 6 that are disposed on the anode layers 5, and anode current collectors 7 that are disposed on the carbon coating layers 6. In the solid-state battery shown in FIG. 1, a cathode active material and the cathode layer 2 correspond to the first electrode active material and the first electrode layer, the solid electrolyte layer 4 corresponds to the electrolyte layer, and an anode active material and the anode layer 5 correspond to the second electrode active material and the second electrode layer. In the solid-state battery shown in FIG. 1, the cathode layers 2 and the insulating layers 3 are disposed on both principal surfaces of the cathode current collector 1, but the solid-state battery of the present disclosure is not limited to this configuration. For example, in the solid-state battery of the present disclosure, the cathode layer 2 and the insulating layer 3 may be disposed on one principal surface of the cathode current collector 1. In the solid-state battery of the present disclosure, it is sufficient that the cathode layer 2 and the anode layer 5 be insulated from each other, and therefore the insulating layer 3 may be an optional component.

The solid-state battery of the present disclosure may include the anode layer and the insulating layer on both principal surfaces or one principal surface of the anode current collector, the solid electrolyte layer disposed on the anode layer and the insulating layer, and the cathode layer and the cathode current collector disposed on the solid electrolyte layer. That is, in the solid-state battery of the present disclosure, the anode active material and the anode layer may correspond to the first electrode active material and the first electrode layer, and the cathode active material and the cathode layer may correspond to the second electrode active material and the second electrode layer.

In the solid-state battery shown in FIG. 1, the cathode current collector 1 includes a cathode current collector tab-side end 1A that is connected to a cathode current collector tab. The insulating layers 3 and the cathode layers 2 are disposed in this order from the cathode current collector tab-side end 1A. The solid-state battery shown in FIG. 1 includes an end insulator 8 at an end of the cathode current collector 1 opposite to the cathode current collector tab-side end 1A. In the present disclosure, the term "laminating direction" means the direction in which the cathode current collector 1, the cathode layers 2, the solid electrolyte layers 4, etc. are laminated as indicated by an arrow X in FIG. 1.

In the solid-state battery shown in FIG. 1, the anode layers 5 are each divided into two layers that are a first anode layer 5A located on the solid electrolyte layer 4, and a second anode layer 5B located on the first anode layer 5A. The anode layers 5 may each be a single layer, or may have two or more sub-layers. In the solid-state battery shown in FIG. 1, the anode current collectors 7 are each divided into two layers that are a first anode current collector 7A located on the anode layer 5, and a second anode current collector 7B located on the first anode current collector 7A. The anode current collectors 7 may each be a single layer, or may have two or more sub-layers.

In the solid-state battery shown in FIG. 1, the Sdr of the surface of the cathode layer 2 in contact with the solid electrolyte layer 4 is 9.2% or more. Therefore, in the solid-state battery shown in FIG. 1, the adhesion between the cathode layer 2 and the solid electrolyte layer 4 is improved. Thus, the solid electrolyte layer 4 can be reliably formed on the cathode layer 2 in the manufacturing process, the peeling of the formed solid electrolyte layer 4 can be suppressed, there is no need to dispose an adhesive layer for causing the solid electrolyte layer 4 to adhere to the cathode layer 2, and the decrease in battery performance due to low adhesion between the cathode layer 2 and the solid electrolyte layer 4 can be suppressed.

The cathode layer 2 contains at least a cathode active material, and may further optionally contain a dispersion medium, an electrolyte, a conductive aid, a binder, etc. The cathode layer 2 may further contain various additives. The cathode active material may be any known material that is used as a cathode active material for secondary batteries. Examples of the cathode active material include at least one selected from various lithium-containing compounds, elemental sulfur, and sulfur compounds. The lithium-containing compound serving as the cathode active material may be any of various lithium-containing oxides such as lithium cobaltate, lithium nickelate, Li_{1±α}Ni_{1/3}Co_{1/3}Mn_{1/3}O_{2±δ}, lithium manganate, spinel-based lithium compounds (such as Li-Mn spinel substituted with different elements having a composition represented by Li₁₊ₓMn_{2-x-y}M_{y}O₄ (where M is one or more selected from Al, Mg, Co, Fe, Ni, and Zn)), lithium titanate, and lithium metal phosphate (such as LiMPO₄, where M is one or more selected from Fe, Mn, Co, and Ni). The dispersion medium may contain, for example, at least one selected from the group consisting of tetralin, butyl butyrate, and N-methyl-2-pyrrolidone.

The solid electrolyte layer 4 may be an electrolyte layer containing a solid electrolyte that is used in semi-solid-state batteries and all-solid-state batteries. The thickness of the electrolyte layer is not particularly limited, and can be selected, for example, from a range of 1 µm to 30 µm. The solid electrolyte layer 4 may be a single layer or may be a multilayer structure including two or more layers. When the solid-state battery of the present disclosure includes a solid electrolyte, the solid-state battery may include, together with the solid electrolyte, an electrolytic solution in an amount of less than 10 mass% with respect to the total mass of the electrolyte. The solid electrolyte may be a composite solid electrolyte containing an inorganic solid electrolyte and a polymer electrolyte. The solid electrolyte preferably contains at least one solid electrolyte selected from the solid electrolyte group consisting of sulfide solid electrolytes, oxide solid electrolytes, and halide solid electrolytes. When the solid-state battery of the present disclosure includes an electrolytic solution as an electrolyte, the type of the electrolytic solution is not particularly limited, and any known electrolytic solution can be used. Specific examples of the electrolytic solution include liquids obtained by dissolving a lithium salt such as LiPF₆ or LiFSi in an organic solvent.

### Method for Manufacturing Solid-state Battery

The method for manufacturing the solid-state battery according to the present disclosure includes the steps of: kneading materials other than a first electrode active material, and then adding the first electrode active material and further kneading the materials; forming an electrolyte layer containing a solid electrolyte on a first electrode layer formed from a first electrode slurry containing the first electrode active material and obtained in the above step; and forming a second electrode layer containing a second electrode active material on the electrolyte layer. The Sdr of the surface of the first electrode layer in contact with the electrolyte layer is 9.2% or more. In particular, in the method for manufacturing the solid-state battery according to the present disclosure, the Sdr is preferably 10.4% or more. The method for manufacturing the solid-state battery according to the present disclosure uses the first electrode slurry obtained by kneading the materials other than the first electrode active material, and then adding the first electrode active material and further kneading the materials. Thus, the Sdr of the surface of the first electrode layer in contact with the electrolyte layer is easily set to 9.2% or more, and the electrolyte layer can be disposed on the first electrode layer with high adhesion. The above solid-state battery of the present disclosure is not limited to the one manufactured by the method for manufacturing the solid-state battery according to the present disclosure, as long as the Sdr of the surface of the first electrode layer in contact with the electrolyte layer is 9.2% or more.

In the method for manufacturing the solid-state battery according to the present disclosure, when the first electrode active material is a cathode active material, the materials other than the first electrode active material include a dispersion medium, a solid electrolyte, a conductive aid, a binder, etc. other than the cathode active material. In the method for manufacturing the solid-state battery according to the present disclosure, the kneading intensity when kneading the materials other than the first electrode active material and the kneading intensity when kneading the materials after adding the first electrode active material are not particularly limited, and may be the same kneading intensity or different kneading intensities. When the materials are kneaded using a thin film rotation method, the kneading intensity increases as the peripheral speed and the processing time increase.

Comparing a first electrode slurry prepared at a high kneading intensity with a first electrode slurry prepared at a low kneading intensity, the Sdr is higher when the first electrode slurry prepared at a low kneading intensity is used. Therefore, by adjusting the types of the materials used, the ratio of the materials, the kneading intensity, etc., the Sdr of the surface of the first electrode layer in contact with the electrolyte layer can be set to 9.2% or more, and preferably 10.4% or more.

In the step of forming the electrolyte layer in the method for manufacturing the solid-state battery according to the present disclosure, the electrolyte layer is preferably transferred onto the first electrode layer. To transfer the electrolyte layer, the electrolyte layer formed on a film for film formation is laid on the first electrode layer, and then the film for film formation is peeled off. Thus, the electrolyte layer can be transferred onto the first electrode layer. In the method for manufacturing the solid-state battery according to the present disclosure, the Sdr of the surface of the first electrode layer in contact with the transferred electrolyte layer is 9.2% or more. After the electrolyte layer is transferred onto the surface of the first electrode layer, the Sdr of the surface of the first electrode layer in contact with the electrolyte layer is 9.2% or more, which means that the Sdr of the surface of the first electrode layer onto which the electrolyte layer is transferred is more than 9.2%. As described above, in the method for manufacturing the solid-state battery according to the present disclosure, the Sdr of the surface of the first electrode layer onto which the electrolyte layer is transferred is more than 9.2%, and therefore the first electrode layer and the electrolyte layer can firmly adhere to each other.

The method for manufacturing the solid-state battery according to the present disclosure preferably includes a step of pressurizing the first electrode layer and the electrolyte layer in the laminating direction after the step of forming the electrolyte layer. By pressurizing the first electrode layer and the electrolyte layer in the laminating direction, the first electrode layer and the electrolyte layer can adhere to each other more firmly. In particular, when the first electrode layer is a cathode layer, the cathode active material contained in the cathode layer can be densified by pressurizing the cathode layer and the electrolyte layer in the laminating direction. Therefore, a solid-state battery with better battery characteristics can be manufactured.

Hereinafter, the solid-state battery of the present disclosure will be described in more detail using examples. However, the technical scope of the present disclosure is not limited to the following examples.

### Preparation of Cathode

A cathode active material (LiNi_{0.8}Co_{0.1}Mn_{0.1}O₂ (NCM811)) and a sulfide solid electrolyte (Li₂S-P₂S₅-based glass ceramic containing Li, D50 = 0.8 µm) were weighed out such that the volume ratio of the cathode active material to the sulfide solid electrolyte was 75:25, and single-walled carbon nanotubes, butadiene rubber serving as a binder, and tetralin were also weighed out. These were placed into a Filmix device (30-L manufactured by Primix Corporation) in weighing pattern 1 or weighing pattern 2, and the kneading intensity (peripheral speed and time) was adjusted as shown in Table 1 to prepare a cathode slurry. Next, the prepared cathode slurry was applied onto an aluminum foil and dried at 100°C for 30 minutes. Then, the laminate was punched out to a size of 1 cm² and pressed at 175°C and 5 t/cm² to prepare a cathode including a cathode active material layer.

In weighing pattern 1, the cathode active material, the sulfide solid electrolyte, the binder, and the tetralin were placed and kneaded simultaneously. The kneading conditions for weighing pattern 1 were a peripheral speed of 10 m/sec to 25 m/sec and a kneading time of 5 minutes to 20 minutes.

In weighing pattern 2, the sulfide solid electrolyte, the binder, and the tetralin were first placed and kneaded simultaneously, and then the cathode active material was placed and kneaded again. The kneading conditions for weighing pattern 2 were a peripheral speed of 10 m/sec to 25 m/sec for both the first kneading and the second kneading, and a combined kneading time of 5 minutes to 20 minutes for the first kneading and the second kneading (the first kneading time and the second kneading time were the same).

### Preparation of Solid Electrolyte Layer

A sulfide solid electrolyte (Li₂S-P₂S₅-based glass ceramic containing Li, D50 = 2.5 µm), butadiene rubber serving as a binder, and tetralin were placed into a Filmix device (30-L manufactured by Primix Corporation) and kneaded at a peripheral speed of 20 m/sec for a dispersion time of 10 minutes to prepare a solid electrolyte slurry. Next, the obtained solid electrolyte slurry was applied onto an aluminum foil (film for film formation) and dried at 100°C for 30 minutes.

### Transfer Method

The aluminum foil having the obtained cathode active material layer and the aluminum foil (film for film formation) having the solid electrolyte layer were attached together such that the cathode active material layer and the solid electrolyte layer were in contact with each other, and the resulting laminate was passed through a press machine at 90°C and 2 t/cm². The aluminum foil (film for film formation) on the solid electrolyte side was then peeled off, thereby transferring the solid electrolyte layer onto the cathode active material layer.

### Measurement of Transfer Area

After the solid electrolyte layer was transferred, an image of the surface was captured, and the area of the transferred solid electrolyte layer was measured using ImageJ. The ratio of the area of the transferred solid electrolyte layer to the area of the solid electrolyte layer before the aluminum foil (film for film formation) was peeled off was calculated.

### Measurement of Sdr

After the solid electrolyte layer was transferred, the Sdr of the surface of the cathode active material layer in contact with the electrolyte layer was measured using a laser microscope OLS5100 manufactured by Olympus Corporation.

### Results

For the laminate of the cathode and the solid electrolyte layer prepared in this example, the weighing pattern in the preparation of the cathode, the kneading intensity, the Sdr of the surface of the cathode active material layer in contact with the solid electrolyte layer, and the area ratio of the transferred solid electrolyte layer are collectively shown in Table 1.

**Table 1**

| **Kneading procedure** | **Kneading intensity** | **Sdr [%]** | **Area ratio [%]** |
|---|---|---|---|
| Weighing pattern 1 | Peripheral speed: 25 m/s × 10 min | 7.6 | 39.6 |
| Weighing pattern 1 | Peripheral speed: 25 m/s × 10 min | 7.7 | 39.6 |
| Weighing pattern 1 | Peripheral speed: 25 m/s × 10 min | 7.9 | 39.6 |
| Weighing pattern 1 | Peripheral speed: 15 m/s × 10 min | 7.5 | 51.7 |
| Weighing pattern 1 | Peripheral speed: 15 m/s × 10 min | 7.6 | 51.7 |
| Weighing pattern 1 | Peripheral speed: 15 m/s × 10 min | 8.2 | 51.7 |
| Weighing pattern 1 | Peripheral speed: 15 m/s × 10 min | 8.3 | 51.7 |
| Weighing pattern 1 | Peripheral speed: 15 m/s × 5 min | 7.7 | 72.0 |
| Weighing pattern 1 | Peripheral speed: 10 m/s × 20 min | 8.0 | 88.1 |
| Weighing pattern 1 | Peripheral speed: 10 m/s × 20 min | 8.1 | 88.1 |
| Weighing pattern 1 | Peripheral speed: 10 m/s × 20 min | 8.5 | 88.1 |
| Weighing pattern 2 | Peripheral speed: 10 m/s × 15 min | 9.2 | 95.0 |
| Weighing pattern 2 | Peripheral speed: 10 m/s × 15 min | 9.3 | 99.0 |
| Weighing pattern 2 | Peripheral speed: 10 m/s × 15 min | 10.4 | 100.0 |
| Weighing pattern 2 | Peripheral speed: 10 m/s × 15 min | 10.5 | 100.0 |
| Weighing pattern 2 | Peripheral speed: 10 m/s × 15 min | 10.9 | 100.0 |
| Weighing pattern 2 | Peripheral speed: 10 m/s × 12 min | 11.1 | 100.0 |
| Weighing pattern 1 | Peripheral speed: 10 m/s × 12 min | 11.1 | 100.0 |
| Weighing pattern 1 | Peripheral speed: 10 m/s × 12 min | 11.4 | 100.0 |
| Weighing pattern 2 | Peripheral speed: 10 m/s × 12 min | 12.2 | 100.0 |
| Weighing pattern 2 | Peripheral speed: 10 m/s × 12 min | 12.9 | 100.0 |
| Weighing pattern 2 | Peripheral speed: 10 m/s × 10 min | 13.1 | 100.0 |
| Weighing pattern 2 | Peripheral speed: 10 m/s × 10 min | 13.2 | 100.0 |
| Weighing pattern 2 | Peripheral speed: 10 m/s × 10 min | 13.4 | 100.0 |
| Weighing pattern 2 | Peripheral speed: 10 m/s × 10 min | 14.5 | 100.0 |
| Weighing pattern 2 | Peripheral speed: 10 m/s × 5 min | 19.0 | 100.0 |
| Weighing pattern 2 | Peripheral speed: 10 m/s × 5 min | 20.1 | 100.0 |

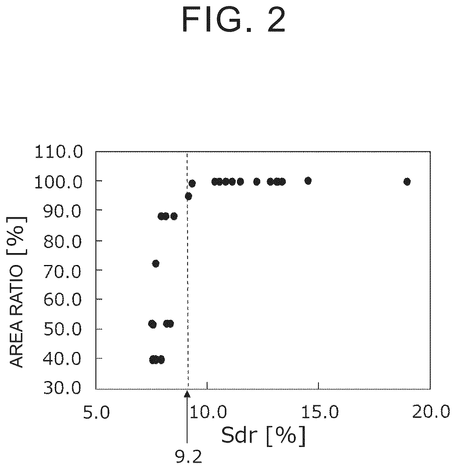

Based on the results shown in Table 1, the relationship between the Sdr of the surface of the cathode active material layer in contact with the solid electrolyte layer and the area ratio of the transferred solid electrolyte layer is shown in FIG. 2. From Table 1 and FIG. 2, it can be seen that, when the Sdr of the surface of the cathode active material layer in contact with the solid electrolyte layer is 9.2% or more, the area ratio of the solid electrolyte layer is 95% and the cathode active material layer and the solid electrolyte layer firmly adhere to each other.

## Claims

1. A solid-state battery comprising:
a first electrode layer containing a first electrode active material;
an electrolyte layer containing a solid electrolyte and disposed on the first electrode layer; and
a second electrode layer containing a second electrode active material and disposed on the electrolyte layer, wherein
an Sdr of a surface of the first electrode layer in contact with the electrolyte layer is 9.2% or more.

2. The solid-state battery according to claim 1, wherein the first electrode active material is a cathode active material, and the first electrode layer is a cathode layer disposed on a cathode current collector.

3. The solid-state battery according to claim 1, wherein no adhesive layer is provided between the first electrode layer and the electrolyte layer.

4. A method for manufacturing a solid-state battery, the method comprising:
kneading materials other than a first electrode active material, and then adding the first electrode active material and further kneading the materials;
forming an electrolyte layer containing a solid electrolyte on a first electrode layer formed from a first electrode slurry containing the first electrode active material and obtained by the kneading; and
forming a second electrode layer containing a second electrode active material on the electrolyte layer, wherein
an Sdr of a surface of the first electrode layer in contact with the electrolyte layer is 9.2%.

5. The method according to claim 4, wherein, in the forming of the electrolyte layer, the electrolyte layer is transferred onto the first electrode layer.

6. The method according to claim 4, further comprising pressurizing the first electrode layer and the electrolyte layer in a laminating direction after the forming of the electrolyte layer.
